# EUROPÄISCHE PATENTSCHRIFT

(11) **EP 2 780 105 B1**
(45) Veröffentlichungstag und Bekanntmachung des Hinweises auf die Patenterteilung: **03.06.2020**
(21) Anmeldenummer: 11784955.4
(22) Anmeldetag: 12.10.2011
(51) Int. Cl.: B01J 8/06, C10G 2/00, C10L 3/08

(54) **ROHRBÜNDELREAKTOR ZUR DURCHFÜHRUNG KATALYTISCHER GASPHASENREAKTIONEN**
SHELL-AND-TUBE REACTOR FOR CARRYING OUT CATALYTIC GAS PHASE REACTIONS
RÉACTEUR À TUBES ET CALANDRE POUR LA MISE EN OEUVRE DE RÉACTIONS CATALYTIQUES EN PHASE GAZEUSE

(30) Priorität: 14.09.2010 DE 102010040757
(43) Veröffentlichungstag der Anmeldung: 24.09.2014
(73) Patentinhaber: MAN Energy Solutions SE, 86153 Augsburg (DE)
(72) Erfinder: LEHR, Manfred, 94469 Deggendorf (DE); DACHS, Josef, 94469 Deggendorf (DE); EGNER, Franz, 94269 Rinchnach (DE); BANK, Rolf, 94469 Deggendorf (DE); STÜRMER, Bernd, 70569 Stuttgart (DE); FRICK, Volkmar, 70374 Stuttgart (DE); SPECHT, Michael, 71111 Waldenbuch (DE)
(86) Internationale Anmeldenummer: PCT/EP2011/067761
(87) Internationale Veröffentlichungsnummer: WO 2012/035173

(56) Entgegenhaltungen:
- EP-A1- 1 621 247
- EP-A1- 1 627 678
- EP-A2- 1 586 370
- DE-A1- 2 929 300
- DE-A1- 3 247 821
- DE-A1- 19 723 322
- GB-A- 472 629
- US-A1- 2006 003 402
- US-A1- 2009 043 114

## Beschreibung

Die Erfindung bezieht sich auf einen Rohrbündelreaktor zur Durchführung katalytischer Gasphasenreaktionen, insbesondere von Methanisierungsreaktionen, mit einem Bündel katalysatorgefüllter Reaktionsrohre, die im Betrieb von Reaktionsgas durchströmt und von Wärmeträger umspült werden, wobei die Reaktionsrohre im Bereich der Katalysatorfüllung mindestens zwei voneinander getrennte Wärmeträgerzonen durchlaufen, deren erste sich über den Anfangsbereich der Katalysatorfüllung erstreckt, und wobei im Betrieb die Wärmeträgertemperaturen für jede Wärmeträgerzone so einstellbar sind, dass sie in Strömungsrichtung des Reaktionsgases von Zone zu Zone abnehmen.

Unter dem Begriff "Anfangsbereich der Katalysatorfüllung" wird im Rahmen dieser Anmeldung der Bereich in der Katalysatorfüllung verstanden, in dem sich kurz nach dem Eintritt des Reaktionsgases ein Bereich maximaler Reaktionstemperatur - der sogenannte Hot Spot - entwickelt.

Vor dem Hintergrund endlicher Erdgasvorkommen gibt es ein steigendes Interesse an der Herstellung eines Erdgassubstituts. Dieses als "SNG" - "substitute natural gas" oder "synthetic natural gas" - oder "Austauschgas" bezeichnete Gas wird auf Basis von Kohle, vor allem Braunkohle, oder Biomasse (Bio-SNG bzw. Biomethan) über Synthesegas hergestellt. Damit das SNG Erdgas ersetzen kann, muss es dem Erdgas in seiner Zusammensetzung und seinen Eigenschaften möglichst weitgehend entsprechen. Wenn SNG z. B. in das Erdgasnetz eingespeist werden soll, darf gemäß der im folgenden als "Einspeise-Spezifikation" bezeichneten "Spezifikation Austauschgas nach DVGW G260/G262" der CO₂-Gehalt nicht mehr als 6 Vol-% und der H₂-Gehalt nicht mehr als 5 Vol-% betragen.

Unabhängig vom Ausgangsstoff wird die SNG-Herstellung in vier Verfahrensschritten durchgeführt. Zunächst wird der kohlenstoffhaltige Ausgangsstoff unter Zugabe von Wärme, Wasser und ggf. Sauerstoff zu einem Synthesegas aufgespalten, welches hauptsächlich aus Kohlenmonoxid, Kohlendioxid, Wasserstoff und Wasser besteht. Die Einführung von Luft wird grundsätzlich vermieden, da der Hauptbestandteil Stickstoff die Methankonzentration begrenzt und bei höherer Temperatur unerwünschte Nebenreaktionen ablaufen können Die Synthesegasherstellung geschieht entweder in einem autothermen Reaktor, in dem die Wärme durch Partialoxidation durch das Reaktionsgas selbst erzeugt wird oder in einem allothermen Reaktor, bei dem Wärme von außen zugeführt wird. Letzteres Verfahren hat dabei den Vorteil, dass in das Prozessgas nicht zusätzliches Rauchgas eingetragen wird. In einem zweiten Schritt wird das Synthesegas gereinigt und gekühlt. Die eigentliche Methanisierung wird in einem dritten Schritt durchgeführt. In einem vierten Schritt wird das Synthesegas von unerwünschten Gasbestandteilen befreit und in seiner Zusammensetzung dem gewünschten Einsatzzweck angepasst.

Die maßgebliche Methanisierungsreaktion ist stark exotherm. Sie wird mit Elementen der VIII. Hauptgruppe katalysiert, bevorzugt mit Nickel. Hierbei reagieren 3 Mole Wasserstoff mit einem Mol Kohlenmonoxid und 4 Mole Wasserstoff mit einem Mol Kohlendioxid zu Methan und Wasser:

CO + 3 H₂ ↔ CH₄ + H₂O ΔH_{R}^{O} = -206 kJ/mol

CO₂ + 4 H₂ ↔ CH₄ + 2 H₂O ΔH_{R}^{O} = -165 kJ/mol

Da der für eine vollständige Umsetzung hohe Wasserstoffanteil im ursprünglichen Synthesegas meist nicht vorliegt, wird zu dessen Erhöhung oft mit der sogenannten Wassergas-Shift-Reaktion Kohlenmonoxid und Wasser zu Wasserstoff und Kohlendioxid umgesetzt nach der Gleichung

CO + H₂O ↔ H₂ + CO₂ ΔH_{R}^{O} = -41 kJ/mol

Daneben laufen noch eine Vielzahl anderer Nebenreaktionen ab, darunter auch die Boudouard-Reaktion, bei welcher sich Kohlenmonoxid zu Kohlenstoff und Kohlendioxid zersetzt.

2 CO ↔ C + CO₂ ΔH_{R}^{O} = -173 kJ/mol

Diese Reaktion ist unerwünscht, da das für die Methanisierung benötigte Kohlenmonoxid entfernt wird und sich der entstehende Kohlenstoff auf der Oberfläche des Katalysators ablagert und diesen deaktiviert. Durch Zugabe von Wasser lässt sich diese Reaktion unterdrücken.

In dem Artikel "Entwicklung eines Verfahrens zur Methanisierung von biomassestämmigem Synthesegas in Wabenkatalysatoren", GWF, 150(2009) Nr. 1-2, S. 45-51, wird auf den Gleichgewichtsumsatz der Methanisierungsreaktion bei stöchiometrischen Bedingungen eingegangen. Demnach wird die Methanbildung bei hohen Drücken und bei niedrigen Temperaturen begünstigt. Im drucklosen Betrieb sind CO-Umsätze bis 95% in einem Temperaturbereich zwischen 200°C und 350° möglich.

Bei höheren Temperaturen muss der Druck immer weiter erhöht werden, um gleiche Umsätze zu erhalten. Auch hier steigt die Reaktionsgeschwindigkeit bei steigender Temperatur. Im drucklosen Betrieb wird für einen nahezu vollständigen Umsatz bei einer Temperatur von ca. 225°C eine Verweilzeit von 1 s benötigt, bei ca. 325°C eine Verweilzeit von 0,01 s. So haben die Reaktionsbedingungen einen entscheidenden Einfluss auf die Reaktorgröße und das Reaktorkonzept.

Der Artikel "SNG from coal and dry biomass - A technology review from 1950 to 2009", Fuel, Volume 89, Issue 8, Aug. 2010, S. 1763-1783" gibt einen breiten Überblick über die entwickelten Verfahren zur Herstellung von SNG.

Eine große Anzahl von Verfahren wurde zur Zeit der Ölkrise in den 1970er Jahren entwickelt mit dem Schwerpunkt der SNG-Herstellung aus günstig verfügbarer Kohle. Verfahren mit Festbettreaktoren sind als Lurgi-, TREMP(Haldor Topsoe)-, Conoco/BGC-, HICOM-, Linde-, RMP- und ICI/Koppers-Verfahren bekannt. WirbelschichtVerfahren wurden vom Bureau of Mines, im Bi-Gas-Projekt und im Comflux-Verfahren entwickelt. Daneben gibt es noch andere Konzepte wie das Synthane-Projekt, die katalytische Kohlevergasung und die Flüssigphasenmethanisierung.

Die verwendeten Reaktoren arbeiten entweder adiabat mit zwischengeschalteten Kühlern oder werden vorzugsweise mit Siedewasser gekühlt. Oftmals wird ein Teilstrom des Produktgases zwischengekühlt und wieder in den Reaktoreintritt zurückgeführt.

Die weltweit bislang einzige großtechnische Anlage zur Methanherstellung aus Kohle ist die seit 1984 arbeitende Great Plains Synfuels Plant in North Dakota, USA. Weitere Anlagen wurden aufgrund der hohen Investititionskosten und neuer Funde von Erdgasquellen nicht aufgebaut. In der Dakota-Anlage wird Synthesegas in 14 parallelen Vergasen erzeugt und in mehreren autothermen Methanisierungsreaktoren mit zwischengeschalteten Kühlstufen methanisiert. Das dabei entstehende Kohlendioxid wird unterirdisch gespeichert.

Die DE 25 49 439 A1 beschreibt ein Verfahren zur Herstellung von SNG, bei dem ein vorgeheiztes Synthesegas, welches Kohlenoxide und Wasserstoff enthält, durch einen adiabaten Festbettreaktor geleitet wird und bei dem ein Teil des Produktgases im Kreis zurückgeführt wird und mit dem Rohgas vermischt wird. Durch die Rückführung des Wasserstoff enthaltenden Produktgases wird eine Shift-Reaktion überflüssig. Andererseits vergrößert sich der Reaktor geringfügug. Die Eintrittstemperatur liegt zwischen 250°C und 350°C, die Austrittstemperatur zwischen 500°C und 700°C.

Das Produktgas wird gekühlt, so dass es eine Temperatur zwischen 250 und 350°C besitzt und mindestens 50 Grad über dem Taupunkt liegt Ein Teil des Produktgases wird als Kreisgas abgezogen und in den Rohgasstrom zurückgeführt.

Ein Verfahren zur Erzeugung eines Gases mit einem Methangehalt von 90 bis über 98 Mol-%, trocken, ist in der US 3 922 148 bzw. in der korrespondierenden DE 25 21 189 A1 beschrieben. Hier werden zunächst schwersiedende Fraktionen aus der Erdölaufbereitung mit reinem Sauerstoff und Wasserdampf zu Synthesegas mit einem Methangehalt von 6 bis 20 Mol-%, trocken, bei Temperaturen zwischen 650 und 930°C und einem Druck zwischen 25 und 150 bar umgesetzt Nach Kühlung und Reinigung wird der Methangehalt des Gases in drei Methanisierungsreaktoren mit Festbetten schrittweise auf die Endkonzentration erhöht. Zwischen den Stufen wird das Gas jeweils gereinigt und gekühlt. Der Prozess ist durch die große Anzahl an Methanisierungsstufen sehr aufwendig. Bei der Synthesegaserzeugung muss zudem ein Teil des Einsatzstoffs verbrannt werden. Es werden große Mengen an Arbeitsdampf erzeugt. Insgesamt ist die Effizienz des Prozesses gering.

Die US 3 970 435 beschreibt einen Methanisierungsreaktor mit Zufuhr von Synthesegas aus der Kohlevergasung. Das aus dem Vergaser kommende Synthesegas hat die Zusammensetzung 35% H₂, 35% CO, 2%CO₂, 2 % CO₂, 2% H₂O, 25% CH₄ und 1% Verunreinigungen, wie z.B. H₂S, Flugasche oder Teer. Der Druck beträgt etwa 69 bar. In einem Shift-Reaktor wird der Wasserstoffgehalt erhöht. Das Gas enthält nach einer CO₂-Gaswäsche 56,2% H₂, 18,8% CO und 25% CH₄. Die Eintrittstemperatur in den ersten Reaktor liegt bei 260°C. Er besteht aus einem Siedewasser-Rohrbündelreaktor mit katalysatorbeschichteten sternförmigen Einsätzen in den Reaktionsrohren. Die Katalysatoreinsätze trennen das Reaktionsrohr im Querschnitt in mehrere unabhängige Strömungskanäle. Durch diese Struktur ergibt sich ein niedriger Druckverlust. Die Aktivität des Katalysators ist längs der Rohrachse veränderlich und wird so eingestellt, dass über die gesamte Rohrlänge vorzugsweise die gleiche Wärmemenge erzeugt wird. Die Lebensdauer des Katalysators wird dadurch erhöht. Die Reaktionsrohre sind in Reihen zusammengefasst, welche in mehrere Behälter mit einem Siedemedium, vorzugsweise Wasser, eingetaucht sind. Innerhalb jedes Behälters sind zusätzlich Rücklaufleitungen vorgesehen. Der Druck im Wärmeträgerraum wird auf ca. 69 bar begrenzt, entsprechend einer Siedetemperatur bei Wasser von 285°C.

In der EP 2 110 425 A1 wird ein ähnlicher mehrstufiger Prozess vorgeschlagen mit dem wesentlichen Unterschied, dass die in Reihe geschalteten Methanisierungsreaktoren adiabat arbeiten und jeweils einen nachgeschalteten Produktkühler besitzen.

Ausgangsstoff für die Synthesegaserzeugung ist entweder Kohle oder Biomasse. Im Stand der Technik wird von einem mehrstufigen Prozess ausgegangen, bei dem große Mengen an Produktgas der jeweiligen einzelnen Reaktoren als Kreisgas wieder zurückgeführt werden, um das Eintrittsgas in den Reaktor zu verdünnen. Nach EP 2 110 425 A1 werden die Kreisgasmengen dadurch reduziert, dass das Synthesegas nicht vollständig dem ersten Reaktor zugeführt wird, sondern parallel auf die einzelnen Reaktoren verteilt wird. Kreisgas wird nur beim ersten Reaktor gefahren. Verwendet werden Methanisierungsreaktoren aus dem Stand der Technik. Auf die Höhe der Katalysatoraktivitäten in den einzelnen Reaktoren wird nicht eingegangen. Der Betriebsdruck liegt bei 35 bar, die Einlasstemperatur liegt zwischen 240°C und 300°C, die Austrittstemperatur bei etwa 600°C.

Die DE 24 36 297 A1 beschreibt ein Verfahren zur Herstellung eines SNG, welches direkt in das Erdgasnetz eingespeist werden kann. Das verwendete Rohgas wird durch Druckvergasung von Kohle, Teeren oder schweren Rückstandsölen unter Zugabe von Wasserdampf und Sauerstoff bei 1100°C bis 1500°C bei Drücken zwischen 20 bis 80 bar hergestellt. Nach Kühlung und Reinigung, insbesondere von Schwefelverbindungen, wird es einer mindestens zweistufigen Methanisierung an Nickelkatalysatoren bei Drücken von 5 bis 100 bar und Temperaturen zwischen 200 bis 500°C unterworfen. Nach der ersten Methanisierungstufe hat das Produktgas einen Methangehalt von mindestens 60 Vol-% und wird in der letzten Methanisierungstufe an einem im Gegenstrom indirekt mit Gas gekühlten Katalysator umgesetzt.

In der DE 27 29 921 A1 wird ein Verfahren zur Erzeugung eines SNG mit mindestens 80 Vol-% Methan vorgestellt, welches durch mehrstufige Methanisierung in Festbetten mit Nickelkatalysatoren bei Drücken von 5 bis 100 bar durchgeführt wird. Dabei wird zunächst ein Synthesegas nach einem bekannten Verfahren zur Kohledruckvergasung hergestellt, gereinigt und gekühlt. Mit einem Methangehalt von 8 bis 25% wird es zunächst in einer Hochtemperatur-Methanisierung mit Eintrittstemperaturen zwischen 230°C und 400°C und Austrittstemperaturen zwischen 550°C und 750°C umgesetzt und nachfolgend in eine Tieftemperatur-Methanisierung bei Temperaturen von 230 bis 500°C geführt. Die Hochtemperatur-Methanisierung wird in mindestens 2 adiabaten Festbettreaktoren durchgeführt. Dabei wird jeweils ein Teil des aus den Festbettreaktoren austretenden Produktgases entnommen, gekühlt, verdichtet und zum jeweiligen Reaktoreintritt wieder zurückgeführt. Das aus dem letzten Hochtemperatur-Festbettreaktor austretende methanhaltige Produktgas wird vor Eintritt in die Niedertemperatur-Methanisierung gekühlt. Die Niedertemperatur-Methanisierung wird in einem adiabaten Festbettreaktor und einem gekühlten Gegenstromreaktor nach z.B. der DE 24 36 297 A1 durchgeführt.

In der DE 29 49 588 A1 wird ein methanreiches Gas bei erhöhtem Druck und erhöhter Temperatur so hergestellt, dass das zugeführte Synthesegas in zwei Teilströme aufgeteilt wird. Der erste Teilstrom wird durch ein katalytisches adiabates Festbett geführt und nachfolgend auf 250°C bis 400°C gekühlt, wobei überhitzter Dampf erzeugt wird, mit dem Dampfturbinen zur Stromerzeugung angetrieben werden können. Anschließend wird es mit dem zweiten Teilstrom vermischt und in einen zweiten Methanisierungsreaktor geführt, der jedoch gekühlt ist. Dem ersten adiabaten Festbettreaktor ist ein Shift-Reaktor unmittelbar vorangestellt.

Die US 2010/162626 beansprucht einen adiabaten Methanisierungsreaktor mit zwei mit Katalysator gefüllten Reaktionszonen, die durch eine Trennwand voneinander getrennt sind. Das Reaktionsgasgemisch wird in vorzugsweise zwei gleiche Teilströme aufgeteilt und dem Reaktor an entgegengesetzten Seiten zugeführt, so dass die beiden Teilströme im Gegenstrom durch den Reaktor geführt werden. Auf diese Weise wird das Reaktionsgas am Ende einer Reaktionszone durch das eintretende Reaktionsgas auf der jeweils anderen Seite der Trennwand gekühlt. Der Reaktor wird bevorzugt als Rohrbündelreaktor ausgeführt. In bekannter Weise wird der erste Teil der jeweiligen Katalysatorschüttung für die Shift-Reaktion verwendet und der zweite Teil für die eigentliche Methanisierung. Diesem ersten Reaktor folgen weitere reine Methanisierungsreaktoren, die konstruktiv wie der erste Methanisierungsreaktor ausgeführt sind. Zwischen den einzelnen Reaktoren befinden sich Kühlstufen.

Bei der DE 32 47 821 A1 wird für eine Methanisierungsreaktion ein mit Katalysator gefülltes Reaktionsrohr verwendet, dessen erster Abschnitt einen verringerten hydraulischen Durchmesser aufweist. Das gesamte Reaktionsrohr wird bevorzugt durch Siedewasser gekühlt.

Aus der WO 03/011449 A1 ist ein Rohrbündelreaktor mit Reaktionsrohren bekannt, deren hydraulischer Durchmesser sich in Strömungsrichtung des Reaktionsgases in gleichmäßigen Stufen oder kontinuierlich konisch vergrößert. Der Wärmeträger strömt gegen die Strömungsrichtung des Reaktionsgases vom größeren Reaktionsrohrende zum kleineren. Ferner wird noch vorgeschlagen, die Reaktionsrohre gruppenweise nebeneinander anzuordnen und den hydraulischen Durchmesser von Gruppe zu Gruppe zu vergrößern oder sämtliche Reaktionsrohre gleich auszubilden, aber deren Anzahl von Gruppe zu Gruppe zu erhöhen. Dabei durchströmt ein und derselbe Wärmeträgerstrom sämtliche Reakionsrohrgruppen, oder jede Reakionsrohrgruppe weist einen eigenen Wärmeträgerkreislauf auf wie bei nebeneinander angeordneten einzelnen Rohrbündelreaktoren.

In der EP 1 627 678 A1 wird ein Verfahren zur Durchführung von katalytischen Gasphasenreaktionen unter Verwendung eines Rohrbündelreaktors vorgeschlagen, bei dem das Reaktionsgasgemisch am Eintritt in die Reaktionsrohre aufgeteilt wird und über in den Reaktionsrohren befindlichen Zentralrohren an unterschiedlichen Stellen längs der Katalysatorfüllung zudosiert wird.

US 2006/0003402 A1 beschreibt einen Rohrbündelreaktor zur Durchführung katalytischer Reaktionen, wobei Zufuhrleitungen mit Ausströmöffnungen für die Reaktanden in den Rohren angeordnet sind.

Um langfristig unabhängig von fossilen Energieträgern zu werden und um den Ausstoß von Kohlendioxid zu verringern, wird zunehmend Biomasse zur Bereitstellung von flüssigen und gasförmigen Brennstoffen sowie von Strom und Wärme genutzt Die Erzeugung von Methan und Wärme durch fermentative Prozesse ist ein einfaches und weit verbreitetes Verfahren. Das erzeugte Methan hat jedoch nur eine begrenzte Konzentration und wird meist nur zur Stromerzeugung genutzt. Zur Verwendung als SNG muss es weiter konditioniert werden.

In dem Artikel "Erzeugung von SNG aus ligninreicher Biomasse", Energie/Wasser-Praxis 4/2009, S. 10-16, werden die bekannten Wege der Energienutzung von Biomasse vorgestellt. Es wird gezeigt, dass die Umwandlung der Biomasse zu SNG über die Zwischenschritte der Vergasung und der Methanisierung den höchsten energetischen Umwandlungsgrad erreicht. Hinzu kommt, dass die Energieformen Wärme und Strom bei anderen Verfahren entweder nicht oder nur begrenzt für eine flexible kommerzielle Nutzung speicherbar sind.

Die derzeit verfügbaren kommerziellen großtechnischen Methanisierungsanlagen und -verfahren sind für die Kohlevergasung entwickelt worden. Bei einem Großteil dieser Verfahren wird die Methanisierung bei erhöhtem Druck meist zwischen 20 bar und 80 bar und bei Temperaturen zwischen 350 und 500°C durchgeführt. Die Methanisierungstemperaturen werden bewusst hoch gewählt, um mit der entsprechenden Reaktionswärme Hochdruckdampf zur gekoppelten Stromerzeugung zu erzeugen. Solche Methanisierungsreaktoren sind konstruktiv anspruchsvoll und kostenintensiv.

Kohle wird in bestimmten Regionen abgebaut, in denen große Kohlevorkommen vorhanden sind. Dort ist Kohle zentral in großen Mengen verfügbar. Konzepte, die auf großen Durchsätzen und der Erzeugung elektrischen Stroms mittels Hochdruckdampf basieren, sind deswegen bei Kohlevergasung wirtschaftlich durchführbar. Biomasse jedoch fällt dezentral an und hat im Vergleich zur Kohle zudem eine deutlich geringere Energiedichte. Dies bedingt Anlagengrößen, die um mindestens eine Größenordnung kleiner sind als die aus der Kohlevergasung bekannten. Optimale Anlagengrößen für die thermochemische Umwandlung von Biomasse liegen zwischen 20 MW und 100 MW Brennstoffleistung. So lassen sich die Konzepte zur Kohlevergasung nicht wirtschaftlich auf deutlich kleinere Biomassevergasungsanlagen übertragen, weshalb es auch heute noch keine großtechnische Bio-SNG-Anlage gibt

Nennenswerte Forschungsarbeiten zu diesem Thema werden derzeit z.B. vom ECN (Energy Research Center of the Netherlands) durchgeführt. Hier wird die SNG-Herstellung durch Holzvergasung und Methanisierung in einem Festbettreaktor untersucht.

Seit 2002 ist eine halbkommerzielle 1 MW-SNG-Anlage in Güssing, Österreich, in Betrieb. Dort konnte eine verbesserte SNG-Erzeugung aus Biomasse mit dem AER - Verfahren aufgezeigt werden, bei dem die Biomasse mit einem Zweibett-Vergaser vergast wird. Dabei wird ein umlaufendes festes reaktives CO₂-Adsorbens bei niedriger Vergasungstemperatur verwendet. Das Paul-Scherrer-Institut (PSI) baute für die Methanisierung einen Wirbelschicht-Reaktor. Die Gesamtanlage produzierte 2009 für 250 Stunden 100 m³/h SNG in Erdgasqualität. Die Anlage produziert weiterhin Nutzwärme und Strom. Sie ist u.a. bei www.eee-info.net/cms/ näher beschrieben.

Das ZSW forscht in Zusammenarbeit mit der Anmelderin an einem neuartigen Methanisierungsverfahren unter Verwendung eines salzbadgekühlten Festbettreaktors, vgl. Presseinformation 06/2009, www.zsw.de, oder "Produktion", Nr. 24-25, S. 15. Ein entsprechendes Reaktorkonzept wurde auf der ACHEMA 2009 vorgestellt. Dabei wurden zwei Verfahrenswege zur Bereitstellung von Synthesegas als Ausgangstoff für die Methanisierung vorgestellt. Zum einen kann das Synthesegas mit dem AER-Verfahren aus Biomasse bereitgestellt werden. Die Vorteile des AER-Verfahrens liegen in der Minimierung der Prozessstufen durch den Wegfall einer nachgeschalteten CO₂-Abtrennung und den Wegfall einer CO-Shift-Stufe. Zum anderen kann bisher ungenutzter elektrischer Strom, welcher von regenerativen Quellen oder von konventionellen Kraftwerken während der Nacht erzeugt wird, für die Wasserstofferzeugung durch Elektrolyse genutzt werden, vgl. Presseinformation 06/2010, www.zsw.de. Als Kohlendioxidquelle kommen gespeicherte Abgase aus Kraftwerken mit fossilen Brennstoffen oder Abgase aus Biogasanlagen in Betracht.

Als Kernstück des Methanisierungsreaktors wurde schematisch ein Reaktionsrohr mit drei unabhängigen Wärmeträgerkreisläufen mit flüssigem Salz dargestellt, wobei die Temperatur in Strömungsrichtung des Reaktionsgases abnimmt. Als Vorteile dieses Verfahrens wurden der erprobte Reaktortyp, der skalierbare Aufbau des Reaktors, optimale Temperaturkontrolle durch einstellbaren Temperaturgradienten im Bereich zwischen 550°C und 250°C und durch hohe Wärmekapazität des flüssigen Salzes sowie der Betrieb auf der Rohrseite bis 20 bar angegeben. Als Rohgas für die bisherigen Versuche wurde ein Synthesegas mit der Zusammensetzung 66,5% H₂, 8,5% CO, 13,0%CO₂ und 12,0%CH₄ (% = Vol-%) verwendet. Es wurde ein Produktgas erhalten mit 5,9% H₂, 8,0%CO₂ und 86,1% CH₄ (% = Vol-%). Die Versuche wurden bei Temperaturen zwischen 550°C und 250°C, bei einem Druck von 4 bar und einer Raumgeschwindigkeit von 4000 NI/(I_{cat}^{∗}h) durchgeführt.

Das von der Anmelderin auf der Achema 2009 vorgestellte Reaktorkonzept ermöglicht zwar schon eine wirtschaftlichere Methanisierung von Biomasse, als bisher mit anderen Reaktorkonzepten erreicht. So wird bei adiabatbetriebenen Festbettreaktoren mit nachgeschalteter Kühlung die Reaktion nur ungenügend kontrolliert. Bei Wirbelschichtreaktoren bleibt nach wie vor das Problem des Katalysatorabriebs und ein Reaktionsablauf vergleichbar mit einem ideal vermischten Rührkessel ohne Reaktionsabschluss. Jedoch sind die Produktionskosten immer noch realtiv hoch und erfüllt das austretende Produktgas noch nicht die Einspeise-Spezifikation, um es direkt nach seiner Trocknung in das Erdgasnetz einzuspeisen. Es besteht daher nach wie vor ein Bedarf an geeigneten Methanisierungsreaktoren zur SNG-Herstellung aus Biomasse.

Dementsprechend liegt die Aufgabe der Erfindung darin, einen gattungsgemäßen Rohrbündelreaktor so zu verbessern, dass die Methanisierung von CO-, CO₂- und H₂-haltigen Gasen insbesondere in kleineren, dezentralen Anlagen noch kostengünstiger möglich ist und insbesondere das erzeugte Produktgas nach seiner Trocknung direkt in das Erdgasnetz eingespeist werden kann.

Erfindungsgemäß wird diese Aufgabe bei einem Rohrbündelreaktor gemäß Anspruch 1 gelöst, mit einem Bündel katalysatorgefüllter Reaktionsrohre, die im Betrieb von Reaktionsgas durchströmt und von Wärmeträger umspült werden, wobei die Reaktionsrohre im Bereich der Katalysatorfüllung mindestens zwei voneinander getrennte Wärmeträgerzonen durchlaufen, deren erste sich über den Anfangsbereich der Katalysatorfüllung erstreckt, der die Anfangsfläche der Katalysatorfüllung enthält und in dem die Reaktionstemperaturen ihr Maximum erreichen, und wobei im Betrieb die Wärmeträgertemperaturen für jede Wärmeträgerzone mittels jeweils eigener Wärmeträgerkreisläufe so einstellbar sind, dass sie in Strömungsrichtung des Reaktionsgases von Zone zu Zone abnehmen, und wobei die Reaktionsrohre jeweils einen ersten Reaktionsrohrabschnitt mit einem ersten hydraulischen Durchmesser der Katalysatorfüllung und in Strömungsrichtung des Reaktionsgases danach mindestens einen zweiten Reaktionsrohrabschnitt mit einem zweiten hydraulischen Durchmesser der Katalysatorfüllung aufweisen, der größer ist als der erste, und wobei der erste Reaktionsrohrabschnitt sich über den Anfangsbereich der Katalysatorfüllung erstreckt. Der erste Reaktionsrohrabschnitt erstreckt sich in die zweite Wärmeträgerzone hinein, und jedes Reaktionsrohr weist über seine gesamte Länge einen konstanten Innendurchmesser auf und zumindest in dem ersten Reaktionsrohrabschnitt ist ein Verdränger angeordnet, durch den der erste Reaktionsrohrabschnitt gebildet ist. Der Verdränger ist als Rohr ausgebildet und das Verdrängerrohr weist mindestens eine Einströmöffnung und mindestens eine Ausströmöffnung auf, durch die ein Teil des Reaktionsgases im Bypass zur Katalysatorfüllung strömt, und die sämtliche Ausströmöffnungen liegen in der ersten Wärmeträgerzone.

Unter dem Begriff "hydraulischer Durchmesser der Katalysatorfüllung" wird im Rahmen dieser Anmeldung der hydraulische Durchmesser des Querschnitts verstanden, der durch die Wandungen gebildet wird, die den mit Katalysator gefüllten Raum umschließen.

Durch die erfindungsgemäßen Maßnahmen kann eine höhere Raum/Zeit-Geschwindigkeit und damit eine größere Ausbeute bzw. höhere Katalysatorauslastung erzielt werden bei gleichzeitiger Erfüllung der Einspeise-Spezifikation für das Erdgasnetz. Dadurch, dass die Reaktionsrohre in ihrem Anfangsbereich, d. h. dort wo das Reaktionsgas in die Katalysatorfüllung einströmt und kurz danach die maximale Reaktionstemperatur zu erwarten ist, einen Reaktionsrohrabschnitt mit einem geringeren hydraulischen Durchmesser der Katalysatorfüllung aufweisen als im restlichen Reaktionsrohr und für diesen Reaktionsrohrabschnitt auch eine separate Wärmeträgerzone eingerichtet ist, die sich nicht über diesen Reaktionsrohrabschnitt hinaus erstreckt, kann in dieser ersten Wärmeträgerzone mit einer entsprechend eingestellten Wärmeträgertemperatur und -geschwindigkeit eine hohe Reaktionstemperatur und in Folge dessen eine hohe Reaktionsgeschwindigkeit gefahren werden. Der relativ geringe hydraulische Durchmesser der Katalysatorfüllung bedeutet einen verringerten radialen Transportweg für die Reaktionswärme und damit deren schnellere Abführung, d. h. in Kombination mit der zugehörigen separaten Wärmeträgerzone ist der Kühleffekt deutlich verbessert. Die höhere Reaktionsgeschwindigkeit wiederum bewirkt eine höhere Raum/Zeit-Geschwindigkeit und damit eine Reduzierung des erforderlichen Katalysatorvolumens. Daher können bei gleicher Reaktorleistung kleinere oder weniger Reaktionsrohre eingesetzt werden, oder es können bei gleichem Katalysatorvolumen höhere Durchsätze erzielt werden.

In der sich anschließenden, zweiten Wärmeträgerzone können die Längen des ersten, sich dort möglicherweise noch hinein erstreckenden Reaktionsrohrabschnitts und des zweiten Reaktionsrohrabschnitts in Kombination mit der Wärmeträgertemperatur und -geschwindigkeit so aufeinander abgestimmt werden, dass ein Reaktionstemperaturverlauf bzw. ein Reaktionsverlauf erzielt wird, mit dem das Reaktionsgas einen Methanisierungsgrad erreicht, der die Einspeise-Spezifikation für das Erdgasnetz erfüllt, wenn das erzeugte Produktgas getrocknet ist.

Gegebenenfalls kann im ersten und im zweiten Reaktionsrohrabschnitt der Reaktionsverlauf noch mittels eines geeigneten Aufbaus der Katalysatorfüllung unterschiedlichen Anforderungen angepasst werden.

Vorzugsweise weist der erste Reaktionsrohrabschnitt einen hydraulischen Durchmesser der Katalysatorfüllung im Bereich von 10 mm bis 22 mm auf. Hiermit wird ein besonders schneller Wärmetransport erzielt, da eine nur kleine radiale Wärmetransportstrecke vorhanden ist. Ein schneller Wärmetransport ermöglicht wiederum eine entsprechend hohe Raum/Zeit-Geschwindigkeit.

Jedes Reaktionsrohr weist über seine gesamte Länge einen konstanten Innendurchmesser auf und ist zumindest in dem ersten Reaktionsrohrabschnitt ein Verdränger angeordnet. Diese Maßnahmen ermöglichen eine einfache konstruktive Ausbildung der unterschiedlichen hydraulischen Durchmesser der Katalysatorfüllung, da die geometrischen Abmessungen des Reaktionsrohres, d. h. des den Verdränger umgebenden Außenrohres, über die gesamte Reaktionsrohrlänge gleich bleiben. Dabei erstreckt sich der Verdränger, d. h. der durch ihn gebildete erste Reaktionsrohrabschnitt, in die zweite Wärmeträgerzone um eine Länge hinein, die bevorzugt 5% bis 60% und besonders bevorzugt 10% bis 40% der Längserstreckung der zweiten Wärmeträgerzone beträgt.

Der Verdränger ist als Rohr ausgebildet. Dieses ist eine einfache, kosten- und gewichtssparende Ausführung für einen Verdränger.

Das Verdrängerrohr weist mindestens eine Einströmöffnung und mindestens eine Ausströmöffnung auf, durch die ein Teil des Reaktionsgases im Bypass zur Katalysatorfüllung strömt. Dadurch, dass ein Teil des Reaktionsgases auf einem Teil seines Strömungsweges an der Katalysatorfüllung vorbeiströmt, wird der Bereich der maximalen Reaktionstemperatur vergrößert und dadurch die maximale Reaktionstemperatur selbst verringert, wodurch die lokale Belastung des Katalysators reduziert wird.

Dabei liegt vorzugsweise die Einströmöffnung stromaufwärts der Anfangsfläche der Katalysatorfüllung. Hierdurch wird der Katalysator bereits in seiner Anfang- bzw. Eintrittsfläche deutlich weniger belastet.

Die sämtliche Ausströmöffnungen liegen in der ersten Wärmeträgerzone. Hierdurch strömt das Reaktionsgas vollständig innerhalb der ersten Wärmeträgerzone in die Katalysatorfüllung, so dass die sich dort einstellenden Bereiche erhöhter Reaktionstemperatur ebenfalls innerhalb der ersten Wärmeträgerzone befinden, in der die entsprechend hohe Wärmeableitung ohnehin gewährleistet ist

In einer günstigen Weiterbildung der Erfindung beträgt dabei der Abstand zwischen der in Strömungsrichtung des Reaktionsgases letzten Ausströmöffnung und dem stromabwärtigen Ende der ersten Wärmeträgerzone mindestens 10% der Längserstreckung der ersten Wärmeträgerzone. Mit dieser Maßnahme ist eine weitgehende Methanisierung des Reaktionsgases bereits in der ersten Wärmeträgerzone gewährleistet.

In einer vorteilhaften Ausgestaltung der Erfindung weist der Rohrbündelreaktor genau zwei Wärmeträgerzonen auf. Dadurch, dass der erste Reaktionsrohrabschnitt sich über den Anfangsbereich der Katalysatorfüllung und die erste Wärmeträgerzone sich höchstens bis zum Ende dieses ersten Reaktionsrohrabschnitts erstreckt, kann dort eine so hohe Reaktionstemperatur gefahren werden, dass bereits der größte Teil des Reaktionsgases methanisiert ist und nur eine zweite Wärmeträgerzone ausreicht, um die Methanisierung des Reaktionsgases soweit zu vervollständigen, dass die Einspeise-Spezifikation für das Erdgasnetz erfüllt wird. Damit wird ein erfindungsgemäßer Rohrbündelreaktor möglichst kostengünstig ausgebildet.

Vorzugsweise erstreckt sich die erste Wärmeträgerzone über 15 % bis 40 % der Reaktionsrohrlänge. Hierdurch wird in der ersten Wärmeträgerzone bei hohen Durchsatz bereits ein so hoher Methanisierungsgrad erzielt, dass daran anschließend - insbesondere auch bei nur einer weiteren Wärmeträgerzone - noch eine Erhöhung des Methanisierungsgrades bis zur Erfüllung der Einspeise-Spezifikation gewährleistet ist.

Die Erfindung wird nachfolgend anhand der Figuren beispielshalber noch näher erläutert. Es zeigen:
Figur 1 einen Vertikalschnitt durch eine erste Ausführungsform eines erfindungsgemäßen Rohrbündelreaktors, wobei die Reaktionsrohre in ihrer Querrichtung stark vergrößert dargestellt sind;
Figuren 2a-c jeweils Querschnitte durch Reaktionsrohre mit anschließenden Rohrböden und Trennplatten, einer zweiten, dritten und vierten Ausführungsform eines erfindungsgemäßen Rohrbündelreaktors, wobei die Reaktionsrohre in ihrer Querrichtung stark vergrößert dargestellt sind; und
Figur 2d eine Draufsicht auf das Reaktionsrohr gemäß Figur 2a längs Linie IId-IId.

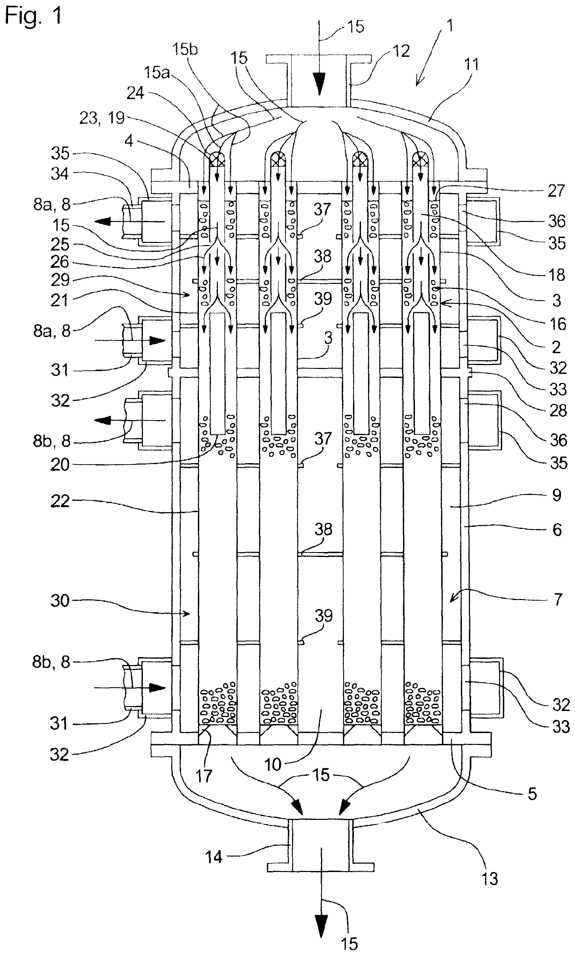

Das in Figur 1 dargestellte Ausführungsbeispiel eines erfindungsgemäßen Rohrbündelreaktors 1 weist ein Bündel 2 katalysatorgefüllter vertikaler Reaktionsrohre 3 auf, deren beide Enden offen sind und an ihrem Außenumfang in einem oberen und in einem unteren Rohrboden 4, 5 jeweils dicht befestigt sind. Das Rohrbündel 2 ist von einem Reaktormantel 6 umschlossen, der mit den Rohrböden 4, 5 dicht verbunden ist und mit diesen einen Wärmeträgerraum 7 ausbildet, in dem die Reaktionsrohre 3 von einem Wärmeträger 8, vorzugsweise flüssigem Salz, umspült werden.

Das Rohrbündel 2 ist ringförmig ausgebildet mit einem rohrfreien Außenring 9 zwischen dem Reaktormantel 6 und den radial außen liegenden Reaktionsrohren 3 und einem rohrfreien Innenraum 10 zwischen den radial innen liegenden Reaktionsrohren 3.

Der obere Rohrboden 4 ist von einer Gaseintrittshaube 11 überspannt, die einen Gaseintrittsstutzen 12 aufweist. Der untere Rohrboden 5 ist von einer Gasaustrittshaube 13 überspannt, die einen Gasaustrittsstutzen 14 aufweist.

Das Reaktionsgas 15 tritt durch den Gaseintrittsstutzen 12 in den Rohrbündelreaktor 1 ein, verteilt sich in der Gaseintrittshaube 11 auf die Reaktionsrohre 3 und durchströmt diese. Das fertige Reaktionsgas 15 bzw. das Produktgas tritt aus den Reaktionsrohren 3 in die Gasaustrittshaube 13 und dann durch den Gasaustrittsstutzen 14 aus dem Rohrbündelreaktor 1 aus.

Die Reaktionsrohre 3 weisen über ihre gesamte Länge einen konstanten Querschnitt auf. Ihre Katalysatorfüllung 16 liegt auf einer Katalysatorhalterung 17 auf, die am unteren Ende der Reaktionsrohre 3 angeordnet ist. Die Katalysatorfüllung 16 erstreckt sich von kurz oberhalb des unteren Rohrbodens 5 bis kurz unterhalb des oberen Rohrbodens 4.

In jedem Reaktionsrohr 3 ist ein Verdrängerrohr 18 angeordnet, das mit seinem oberen Ende 19 um eine vorgegebene Länge aus dem oberen Ende, d. h. aus der Gaseintrittsöffnung des Reaktionsrohrs 3 in die Gaseintrittshaube 11 vorragt und mit seinem unteren Ende 20 sich um eine vorgegebene Länge in die Katalysatorfüllung 16 hinein erstreckt.

Die Reaktionsrohre 3 weisen somit jeweils einen in Strömungsrichtung des Reaktionsgases 15 ersten Reaktionsrohrabschnitt 21 auf, in dem das Verdrängerrohr 18 angeordnet ist, und einen daran anschließenden zweiten Reaktionsrohrabschnitt 22 auf, in dem kein Verdrängerrohr angeordnet ist.

Das Innere des Verdrängerrohres 18 ist frei von Katalysatormaterial, so dass der hydraulische Durchmesser der Katalysatorfüllung 16 in dem ersten Reaktionsrohrabschnitt 21 geringer ist als der hydraulische Durchmesser der Katalysatorfüllung 16 in dem anschließenden zweiten Reaktionsrohrabschnitt 22, in dem kein Verdrängerrohr angeordnet ist.

Das in die Gaseintrittshaube 11 hineinragende Ende 19 des Verdrängerrohres 18 bildet eine Einströmöffnung 23 für das Reaktionsgas 15 aus. Die Einströmöffnung 19 bzw. das Einströmende des Verdrängerrohrs 18 ragt über die Katalysatorfüllung 16, das Reaktionsrohr 3 und den oberen Rohrboden 4 hinaus und ist mit einem Partikelfilter 24 versehen. Innerhalb der Katalysatorfüllung 16 weist das Verdrängerrohr 18 Ausströmöffnungen 25 auf, im dargestellten Beispiel insgesamt an zwei Positionen. Aus den Ausströmöffnungen 25 treten Teile 26 des in dem Verdrängerrohr 18 strömenden Reaktionsgases 15 in die Katalysatorfüllung 16 aus.

Die Reaktionsgasmenge, die ein Reaktionsrohr 3 durchströmt, tritt somit beim Eintritt in das Reaktionsrohr 3 nicht vollständig auch in die Anfangsfläche 27 der Katalysatorfüllung 16 ein. Vielmehr strömt ein Teil 15a dieser Reaktionsgasmenge zunächst in das Verdrängerrohr 18 und dort im Bypass zur Katalysatorfüllung 16, ehe es längs der Katalysatorfüllung 16 verteilt aus dem Verdrängerrohr 18 in die Katalysatorfüllung 16 ausströmt. Durch diese räumliche Verteilung wird die Bildung eines Hot Spots mit zu hoher Reaktionstemperatur vermieden.

Die in die Katalysatorfüllung 16 hineinragende Länge des Verdrängerrohrs 18 ist so ausgelegt, dass es stromabwärts des Bereichs der maximalen Reaktionstemperatur (Hot Spot) endet.

Der Wärmeträgerraum 7 ist durch eine quer zu den Reaktionsrohren 3 verlaufende Trennplatte 28 in zwei voneinander getrennte Wärmeträgerzonen 29, 30 unterteilt. Die Wärmeträgerzonen 29, 30 werden in Strömungsrichtung des Reaktionsgases 15 als erste und zweite Wärmeträgerzone 29, 30 bezeichnet. Die Trennplatte 28 ist stromaufwärts des unteren Endes 20 des Verdrängerrohres 18 und stromabwärts des Bereiches der Katalysatorfüllung 16 angeordnet, in dem die Reaktionstemperaturen ihr Maximum erreichen, d. h. stromabwärts des im Rahmen dieser Anmeldung als Anfangsbereich der Katalysatorfüllung 16 bezeichneten Bereichs. Im in Figur 1 dargestellten Ausführungsbeispiel ist die Trennplatte 28 in einem Abstand von etwa 30% der Reaktionsrohrlänge vom oberen Ende der Reaktionsrohre 3 angeordnet, d. h. beträgt die Längserstreckung der ersten Wärmeträgerzone 29 etwa 30% der Reaktionsrohrlänge ab dem oberen Ende der Reaktionsrohre 3.

Jede Wärmeträgerzone 29, 30 wird in einem eigenen Kreislauf von einem Wärmeträger 8 durchströmt. Er tritt jeweils durch einen Eintrittsstutzen 31 in eine Eintritts-Ringleitung 32 ein, die den Reaktormantel 6 umschließt und mit der jeweiligen Wärmeträgerzone 29, 30 durch Eintrittsöffnungen 33 im Reaktormantel 6 in Strömungsverbindung steht. Durch eine Austritts-Ringleitung 35, die den Reaktormantel 6 umschließt und mit der Wärmeträgerzone 29, 30 durch Austrittsöffnungen 36 im Reaktormantel 6 in Strömungsverbindung steht, tritt der Wärmeträger 8 wieder aus der Wärmeträgerzone 29, 30 aus und wird durch einen Austrittsstutzen 34 abgeleitet.

Im dargestellten Ausführungsbeispiel sind die Eintritts-Ringleitungen 32 jeweils am unteren Ende der Wärmeträgerzone 29, 30 und die Austritts-Ringleitungen 35 jeweils am oberen Ende der Wärmeträgerzone 29, 30 angeordnet, so dass der Wärmeträger 8 in jeder Wärmeträgerzone 29, 30 von unten nach oben strömt. Wärmeträger 8 und Reaktionsgas 15 durchströmen den Rohrbündelreaktor 1 somit im Gegenstrom.

In jeder Wärmeträgerzone 29, 30 sind drei horizontale Umlenkbleche 37, 38, 39 mit einem vorgegebenen vertikalen Abstand zueinander und zum Rohrboden 4, 5 bzw. zur Trennplatte 28 angeordnet. Das in jeder Wärmeträgerzone 29, 30 unterste und oberste Umlenkblech 39, 37 ist ringförmig ausgebildet. Diese ringförmigen Umlenkbleche 39, 37 sind an der Innenwand des Reaktormantels 6 dicht befestigt und erstrecken sich radial einwärts durch das gesamte Rohrbündel 2 hindurch bis zum rohrfreien Innenraum 10. Das mittlere Umlenkblech 38 ist scheibenförmig ausgebildet und erstreckt sich durch den rohrfreien Innenraum 10 hindurch radial auswärts durch das gesamte Rohrbündel 2 und endet in einem vorgegebenen Abstand von der Innenwand des Reaktormantels 6.

Somit werden sämtliche Umlenkbleche 37, 38, 39 von sämtlichen Reaktionsrohren 3 durchlaufen und stützen diese in Querrichtung.

Die Eintrittsöffnungen 33 für den Wärmeträger 8 sind zwischen dem unteren ringförmigen Umlenkblech 39 und dem unteren Rohrboden 5 in der zweiten Wärmeträgerzone 30 bzw. der Trennplatte 28 in der ersten Wärmeträgerzone 29, die Austrittsöffnungen 36 zwischen dem oberen ringförmigen Umlenkblech 37 und der Trennplatte 28 bzw. dem oberen Rohrboden 4 in der zweiten bzw. ersten Wärmeträgerzone 30, 29 angeordnet. Der Wärmeträger 8 wird von den Umlenkblechen 37, 38, 39 somit mäanderförmig im Radialstrom durch die Wärmeträgerzonen 29, 30 geführt, so dass die Reaktionsrohre 3 von dem Wärmeträger 8 überwiegend quer angeströmt werden.

In der ersten Wärmeträgerzone 29 erreichen die Reaktionstemperaturen im Anfangsbereich der Katalysatorfüllung 16 ihr Maximum. Die erste Wärmeträgerzone 29 erstreckt sich über diesen Anfangsbereich um ein vorgegebenes Maß hinweg. Im Ausführungsbeispiel gemäß Figur 1 sind sämtliche zwei Positionen der Ausströmöffnungen 25 in der ersten Wärmeträgerzone 29 angeordnet; das Verdrängerrohr 18 erstreckt sich jedoch noch in die zweite Wärmeträgerzone 30 hinein. Die Temperatur und die Strömungsgeschwindigkeit des Wärmeträgers 8a in dieser ersten Wärmeträgerzone 29 sind so einstellbar, dass eine möglichst hohe Reaktionstemperatur in diesem Reaktionsrohrabschnitt 21 und damit eine möglichst hohe Raum/Zeit-Geschwindigkeit in dem Rohrbündelreaktor 1 gefahren werden kann. Die Kombination eines ersten Reaktionsrohrabschnitts 21, der einen kleineren hydraulischen Durchmesser der Katalysatorfüllung 16 aufweist, mit einer ersten Wärmeträgerzone 29 kann somit ausschließlich dazu optimiert werden, die Raum/Zeit-Geschwindigkeit zu erhöhen.

Dagegen kann die Kombination aus der Temperatur und der Geschwindigkeit des Wärmeträgers 8b in der zweiten Wärmeträgerzone 30 und der Länge des in die zweite Wärmeträgerzone hineinragenden Endes des ersten Reaktionsrohrabschnitts 21 - wenn überhaupt - und dem zweiten Reaktionsrohrabschnitt 22 ausschließlich daraufhin optimiert werden, dass der Methanisierungsgrad des Reaktionsgases 15 soweit erhöht wird, dass die Einspeise-Spezifikation erfüllt wird.

So kann beispielsweise die Wärmeträgertemperatur in der ersten Wärmeträgerzone 29 mit 550°C sehr hoch sein, um eine möglichst hohe Reaktionstemperatur zu bewirken, und in der zweiten Wärmeträgerzone 30 mit 250°C sehr niedrig sein, um die Methanisierung zu vervollständigen und dabei unerwünschte Nebenreaktionen zu verhindern.

Wie die beiden nachfolgend angegebenen, mit den oben beschriebenen Rohrbündelreaktoren 1 durchgeführten Methanisierungs-Beispiele zeigen, wird die Einspeise-Spezifikation ohne weiteres erfüllt:
1. Synthesegas-Methanisierung:
   Eintrittsgemisch: 9% CO; 11% CO₂; 67% H₂; 13% CH₄ (% = Vol-%)
   Wärmeträger: Salzbad in beiden Wärmeträgerzonen
   Reaktionsgasdruck: p < 20bar
   Raum-Zeit-Geschwindigkeit: 5000 1/h
   Austrittsgemisch (trocken): 92,3% CH₄; 4,3% CO₂; 3,4% H₂ (% = Vol-%)
2. Reine CO₂-Methanisierung:
   Eintrittsgemisch: 20,6% CO₂; 79,4% H₂ (% = Vol-%)
   Wärmeträger: Salzbad in beiden Wärmeträgerzonen
   Reaktionsgasdruck: p < 20bar
   Raum-Zeit-Geschwindigkeit: 5000 1/h
   Austrittsgemisch (trocken): 92,3% CH₄; 4,3% CO₂; 3,4% H₂ (% = Vol-%)

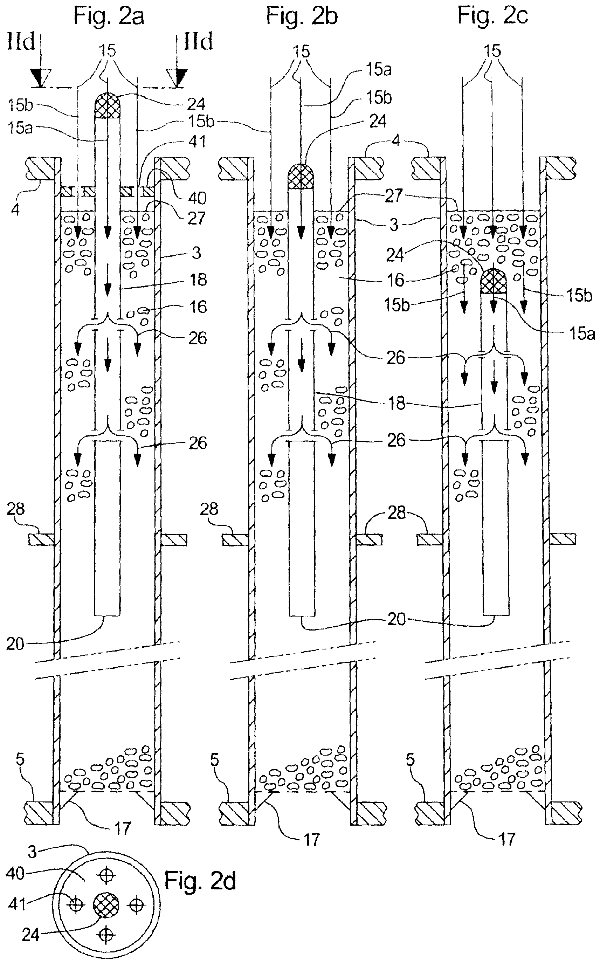

In den Figuren 2a bis 2c sind drei weitere Ausführungsbeispiele für die Anordnung des Verdrängerrohrs 18 im Reaktionsrohr 3 gezeigt.

Das Ausführungsbeispiel gemäß Figur 2a entspricht dem Ausführungsbeispiel gemäß Figur 1 mit einer Drosselscheibe 40, die das Verdrängerrohr 18 umschließt und an diesem sowie an der Innenwand des Reaktionsrohrs 3 dicht befestigt ist. Die Drosselscheibe 40 weist vier Durchgangsöffnungen 41 auf (Figur 2d), durch die hindurch Reaktionsgas 15 in die Anfangsfläche 27 der Katalysatorfüllung 16 einströmen kann.

Die Drosselscheibe 40 ist in einem vorgegebenen Abstand oberhalb der Anfangsfläche 27 der Katalysatorfüllung 16 angeordnet. Mit der Drosselscheibe 40 kann die Reaktionsgasmenge 15b eingestellt werden, die in die Anfangsfläche 27 der Katalysatorfüllung 16 eintreten soll

In Figur 2b ist eine Ausführungsform dargestellt, bei der das Verdrängerrohr 18 einschließlich Partikelfilter 27 zwar aus der Katalysatorfüllung 16 hervorragt, jedoch nicht über den oberen Rohrboden 4 übersteht. Bei dieser Ausführungsform bleibt der obere Rohrboden 4 leicht begehbar.

In Figur 2c ist ein Ausführungsbeispiel dargestellt, bei dem das Verdrängerrohr 18 einschließlich Partikelfilter 27 in der Katalysatorfüllung 16 vollständig eingebettet ist. Das bedeutet, die das Reaktionsrohr 3 durchströmende Reaktionsgasmenge tritt vollständig in die Anfangsfläche 27 der Katalysatorfüllung 16 ein, und erst in der Katalysatorfüllung 16 tritt ein Teil 15a der Reaktionsgasmenge in das Verdrängerrohr 18 ein.

Auch bei allen Ausführungsbeispielen gemäß den Figuren 2a/d bis 2c sind sämtliche Ausströmöffnungen 25 in der ersten Wärmeträgerzone 29 angeordnet und ragt das Verdrängerrohr 18 aber, d. h. der erste Reaktionsrohrabschnitt 21 in die zweite Wärmeträgerzone 30 hinein.

## Patentansprüche

1. Rohrbündelreaktor zur Durchführung katalytischer Gasphasenreaktionen, insbesondere von Methanisierungsreaktionen, mit
einem Bündel katalysatorgefüllter Reaktionsrohre, die im Betrieb von Reaktionsgas (15) durchströmt und von Wärmeträger umspült werden,
wobei die Reaktionsrohre (3) im Bereich der Katalysatorfüllung (16) mindestens zwei voneinander getrennte Wärmeträgerzonen (29, 30) durchlaufen, deren erste sich über den Anfangsbereich der Katalysatorfüllung erstreckt, der die Anfangsfläche der Katalysatorfüllung enthält und in dem die Reaktionstemperaturen ihr Maximum erreichen, und
wobei im Betrieb die Wärmeträgertemperaturen für jede Wärmeträgerzone mittels jeweils eigener Wärmeträgerkreisläufe so einstellbar sind, dass sie in Strömungsrichtung des Reaktionsgases (15) von Zone zu Zone abnehmen, und
wobei die Reaktionsrohre (3) jeweils einen ersten Reaktionsrohrabschnitt (21) mit einem ersten hydraulischen Durchmesser der Katalysatorfüllung (16) und in Strömungsrichtung des Reaktionsgases (15) danach mindestens einen zweiten Reaktionsrohrabschnitt (22) mit einem zweiten hydraulischen Durchmesser der Katalysatorfüllung (16) aufweisen, der größer ist als der erste, und
wobei der erste Reaktionsrohrabschnitt (21) sich über den Anfangsbereich der Katalysatorfüllung (16) erstreckt, und
wobei der erste Reaktionsrohrabschnitt (21) sich in die zweite Wärmeträgerzone (30) hineinerstreckt, und
wobei jedes Reaktionsrohr (3) über seine gesamte Länge einen konstanten Innendurchmesser aufweist und zumindest in dem ersten Reaktionsrohrabschnitt (21) ein Verdränger (18) angeordnet ist, durch den der erste Reaktionsrohrabschnitt (21) gebildet ist, und
wobei der Verdränger (18) als Rohr ausgebildet ist, und
wobei das Verdrängerrohr (18) mindestens eine Einströmöffnung (23) und mindestens eine Ausströmöffnung (25) aufweist, durch die ein Teil (15a) des Reaktionsgases (15) im Bypass zur Katalysatorfüllung (16) strömt,
**dadurch gekennzeichnet, dass**
sämtliche Ausströmöffnungen (25) in der ersten Wärmeträgerzone (29) liegen.

2. Rohrbündelreaktor nach Anspruch 1 , **dadurch gekennzeichnet, dass** der erste Reaktionsrohrabschnitt (21) einen hydraulischen Durchmesser der Katalysatorfüllung (16) im Bereich von 10mm bis 22mm aufweist.

3. Rohrbündelreaktor nach Anspruch 1 oder 2, **dadurch gekennzeichnet, dass** die Einströmöffnung (23) stromaufwärts der Anfangsfläche (27) der Katalysatorfüllung (16) liegt.

4. Rohrbündelreaktor nach einem der Ansprüche 1 bis 3, **dadurch gekennzeichnet, dass** der Abstand zwischen der in Strömungsrichtung des Reaktionsgases (15) letzten Ausströmöffnung (25) und dem stromabwärtigen Ende der ersten Wärmeträgerzone (29) mindestens 10% der Längserstreckung der ersten Wärmeträgerzone (29) beträgt.

5. Rohrbündelreaktor nach einem der Ansprüche 1 bis 4, **dadurch gekennzeichnet, dass** er genau zwei Wärmeträgerzonen (29, 30) aufweist

6. Rohrbündelreaktor nach einem der Ansprüche 1 bis 5, **dadurch gekennzeichnet, dass** sich die erste Wärmeträgerzone (29) über 15%-40% der Reaktionsrohrlänge erstreckt.

## Claims

1. A tube bundle reactor for carrying out catalytic gas phase reactions, in particular methanizing reactions, having a bundle of catalyst-filled reaction tubes which during the operation are flowed through by reaction gas (15) and washed around by heat transfer medium, wherein the reaction tubes (3) in the region of the catalyst charge (16) pass through at least two heat transfer medium zones (29,30) that are separated from one another, the first one of which extends over the starting region of the catalyst charge, which contains the starting surface of the catalyst charge and in which the reaction temperatures reach their maximum, and
wherein during the operation the heat transfer medium temperatures for each heat transfer medium zone are adjustable by means of in each case own heat transfer medium circuits so that they decrease in the flow direction of the reaction gas (15) from zone to zone, and
wherein the reaction tubes (3) each comprise a first reaction tube portion (21) having a first hydraulic diameter of the catalyst charge (16), and in the flow direction of the reaction gas (15) thereafter at least one second reaction tube portion (22) having a second hydraulic diameter of the catalyst charge (16), which is greater than the first, and
wherein the first reaction tube portion (21), extends over the starting region of the catalyst charge (16), and
wherein the first reaction tube portion (21) extends into the second heat transfer medium zone (30), and wherein each reaction tube (3) over its entire length has a constant inner diameter and at least in the first reaction tube portion (21), a displacer (18) is arranged, by way of which the first reaction tube portion (21) is formed, and wherein the displacer (18) is formed as tube, and
wherein the displacer tube (18) comprises at least one inflow opening (23) and at least one outflow opening (25), through which a part (15a) of the reaction gas (15) in the bypass flows to the catalyst charge (16), **characterised in that**
all outflow openings (25) are situated in the first heat transfer medium zone (29).

2. The tube bundle reactor according to Claim 1, **characterised in that** the first reaction tube portion (21) has a hydraulic diameter of the catalyst charge (16) in the range from 10 mm to 22 mm.

3. The tube bundle reactor according to Claim 1 or 2, **characterised in that** the inflow opening (23) is situated upstream of the starting surface (27) of the catalyst charge (16).

4. The tube bundle reactor according to any one of the Claims 1 to 3, **characterised in that** the distance between the, in inflow direction of the reaction gas (15), last outflow opening (25) and the downstream end of the first heat transfer medium zone (29) amounts to at least 10% of the longitudinal extent of the first heat transfer medium zone (29).

5. The tube bundle reactor according to any one of the Claims 1 to 4, **characterised in that** it comprises exactly two heat transfer medium zones (29,30).

6. The tube bundle reactor according to any one of the Claims 1 to 5, **characterised in that** the first heat transfer medium zone (29) extends over 15%-40% of the reaction tube length.

## Revendications

1. Réacteur à faisceau de tubes pour effectuer des réactions catalytiques en phase gazeuse, en particulier des réactions de méthanation, comportant un faisceau de tubes de réaction remplis de catalyseur qui s'écoulent pendant le fonctionnement du gaz de réaction (15) et sont rincés avec un milieu de transfert de chaleur, dans lequel les tubes de réaction (3) dans la région du remplissage de catalyseur (16) ont au moins deux zones de transfert de chaleur distinctes (29, 30), dont la première s'étend sur la zone initiale de la charge de catalyseur, qui contient la zone initiale de la charge de catalyseur et dans lequel les températures de réaction atteignent leur maximum, et dans lequel pendant le fonctionnement, les températures de transfert de chaleur pour chaque zone de transfert de chaleur peuvent être ajustées au moyen de circuits de transfert de chaleur séparés de telle manière qu'elles diminuent de zone en zone dans le sens d'écoulement du gaz de réaction (15), et dans lequel les tubes de réaction (3) ont chacun une première section de tube de réaction (21) avec un premier diamètre hydraulique du remplissage de catalyseur (16) et présentent dans la direction d'écoulement du gaz de réaction (15) par la suite au moins une deuxième section de tube de réaction (22) avec un seconde diamètre hydraulique du remplissage de catalyseur (16) qui est plus grand que le premier, et dans lequel la première section de tube de réaction (21) s'étend sur la région initiale du remplissage de catalyseur (16), et dans lequel la première section de tube de réaction (21) s'étend dans la deuxième zone de transfert de chaleur (30) et chaque tube de réaction (3) a un diamètre intérieur constant sur toute sa longueur et au moins dans la première section de tube de réaction (21) un dispositif de déplacement (18) est disposé, à travers lequel la première section de tube de réaction (21) est formée, et dans lequel le dispositif de déplacement (18) est conçu comme un tube, et dans lequel le tube de déplacement (18) est présente moins une ouverture d'entrée (23) et au moins une ouverture de sortie (25) à travers laquelle une partie (15a) du gaz de réaction (15) s'écoule dans la dérivation vers le remplissage de catalyseur (16), **caractérisé en ce que** toutes les ouvertures de sortie (25) se situent dans la première zone de transfert de chaleur (29).

2. Réacteur à faisceau de tubes selon la revendication 1, **caractérisé en ce que** la première section de tube de réaction (21) a un diamètre hydraulique du remplissage de catalyseur (16) dans la plage de 10 mm à 22 mm.

3. Réacteur à faisceau tubulaire selon la revendication 1 ou 2, **caractérisé en ce que** l'ouverture d'entrée (23) se situe en amont de la surface de départ (27) de la charge de catalyseur (16).

4. Réacteur à faisceau tubulaire selon une des revendications 1 à 3, **caractérisé en ce que** la distance entre la dernière ouverture de sortie (25) dans le sens d'écoulement du gaz de réaction (15) et l'extrémité aval de la première zone de transfert de chaleur (29) est d'au moins 10% de l'étendue longitudinale de la première zone de transfert de chaleur (29).

5. Réacteur à faisceau tubulaire selon une des revendications 1 à 4, **caractérisé en ce qu'**il présente exactement deux zones de transfert de chaleur (29, 30).

6. Réacteur à faisceau de tubes selon une des revendications 1 à 5, **caractérisé en ce que** la première zone de transfert de chaleur (29) s'étend sur 15%-40% de la longueur du tube de réaction.
